# EUROPÄISCHE PATENTANMELDUNG

(11) **EP 1 411 483 A2**
(43) Veröffentlichungstag der Anmeldung: **21.04.2004**
(21) Anmeldenummer: 03090274.6
(22) Anmeldetag: 28.08.2003
(51) Int. Cl.: G07F 19/00, G06F 17/60

(54) **Verfahren zum vorbereiten eines bezahlvorganges in einem Kommunikationsnetz**

(30) Priorität: 18.10.2002 DE 10249612
(71) Anmelder: SIEMENS AKTIENGESELLSCHAFT, 80333 München (DE)
(72) Erfinder: Lüttge, Karsten, 10318 Berlin (DE)

(57) **Zusammenfassung**

Die Erfindung betrifft ein Verfahren zum Vorbereiten eines Bezahlvorganges mittels eines Kommunikationsendgerätes (KEG) eines Zahlungsschuldners und eines Empfängerendgerätes (EEG) eines Zahlungsempfängers, wobei das Kommunikationsendgerät (KEG) einem ersten Zahlungssystem (ZS1) eines ersten Kommunikationsnetzes (KN1) und das Empfängerendgerät einem zweiten Zahlungssystem (ZS2) zugeordnet (Z2) ist. Dabei werden auf eine den Zahlungsschuldner betreffende Zahlungsanforderungsnachricht (2) des Empfängerendgerätes hin von dem zweiten Zahlungssystem (ZS2) der Zahlungsanforderungsnachricht zugeordnete Berechtigungsdaten erstellt und an das Empfängerendgerät gesendet; von dem Empfängerendgerät wird eine weitere Zahlungsanforderungsnachricht zusammen mit den Berechtigungsdaten zu dem ersten Zahlungssystem übertragen. Von dem ersten Zahlungssystem wird anhand der Berechtigungsdaten überprüft, ob der Zahlungsempfänger zur Teilnahme an dem Bezahlvorgang berechtigt ist, und gegebenenfalls wird daraufhin von dem ersten Zahlungssystem ein die zahlungsschuldnerseitige Zahlung garantierender Garantie-Datensatz zu dem Empfängerendgerät übertragen.

## Beschreibung

Die Erfindung betrifft ein Verfahren zum Vorbereiten eines Bezahlvorganges unter Nutzung eines ersten Kommunikationsnetzes.

Es besteht z. B. beim sogenannten "elektronischen Handel" (E-Commerce) die Notwendigkeit Zahlungsvorgänge unter Nutzung von Kommunikationsnetzen durchzuführen. Solche Zahlungsvorgänge können z. B. bei der Erbringung von kostenpflichtigen Diensten (z. B. Lieferung von Informationen, Daten oder Waren) über die Kommunikationsnetze auftreten. Als derartige Kommunikationsnetze werden beispielsweise das Internet, Telefonfestnetze oder Mobilfunknetze der zweiten und dritten Generation genutzt. Zur Bezahlung der Dienste oder Leistungen werden Verfahren beispielsweise für das bargeldlose Bezahlen unter Nutzung eines mobilen Endgerätes (z. B. eines Mobiltelefons, eines Laptops, eines PDAs (Personal Digital Assistant) oder eines Palmtops) und/oder eines Internetendgerätes (z. B. eines Internetrechners) benötigt. Es werden jedoch auch außerhalb des elektronischen Handels und unabhängig von der Erbringung von Diensten Verfahren zum Bezahlen über Kommunikationsnetze benötigt, beispielsweise bei Spenden.

Mitunter führen Zahlungsempfänger die relativ aufwendigen Zahlungsvorgänge nicht selbst aus, sondern bedienen sich der Hilfe von Zahlungsdienstleistern, sogenannten "Payment-Service-Providern", welche Zahlungssysteme zum Abwickeln von Bezahlvorgängen betreiben. An derartigen Bezahlvorgängen bzw. Zahlungsvorgängen sind also mitunter ein Zahlungsschuldner (z. B. ein Kunde, Consumer), ein Zahlungsempfänger (z. B. ein Händler, Service-Provider, Merchant) und ein Zahlungssystem eines Zahlungsdienstleisters beteiligt, wobei sowohl der Zahlungsschuldner als auch der Zahlungsempfänger die Dienste des Zahlungsdienstleisters bzw. des Zahlungssystems in Anspruch nehmen.

Es ist Aufgabe der vorliegenden Erfindung, ein Verfahren anzugeben, mit dem auf einfache und zuverlässige Art und Weise Bezahlvorgänge mittels eines Kommunikationsendgerätes eines Zahlungsschuldners und eines Empfängerendgerätes eines Zahlungsempfängers auch dann vorbereitet werden können, wenn die Endgeräte des Zahlungsschuldners und des Zahlungsempfängers verschiedenen Zahlungssystemen zugeordnet sind.

Diese Aufgabe wird erfindungsgemäß gelöst durch ein Verfahren zum Vorbereiten eines Bezahlvorganges mittels eines Kommunikationsendgerät eines Zahlungsschuldners und eines Empfängerendgerätes eines Zahlungsempfängers, wobei das Kommunikationsendgerät einem ersten Zahlungssystem eines ersten Kommunikationsnetzes und das Empfängerendgerät einem zweiten Zahlungssystem zugeordnet ist, bei dem auf eine den Zahlungsschuldner betreffende Zahlungsanforderungsnachricht des Empfängerendgerätes hin von dem zweiten Zahlungssystem der Zahlungsanforderungsnachricht zugeordnete Berechtigungsdaten erstellt und an das Empfängerendgerät gesendet werden, von dem Empfängerendgerät eine weitere Zahlungsanforderungsnachricht zusammen mit den Berechtigungsdaten zu dem ersten Zahlungssystem übertragen wird, von dem ersten Zahlungssystem anhand der Berechtigungsdaten überprüft wird, ob der Zahlungsempfänger zur Teilnahme an dem Bezahlvorgang berechtigt ist, und gegebenenfalls daraufhin von dem ersten Zahlungssystem ein die zahlungsschuldnerseitige Zahlung garantierender Garantie-Datensatz zu dem Empfängerendgerät übertragen wird.

Das erfindungsgemäße Verfahren kann so ausgestaltet sein, dass von dem zweiten Zahlungssystem anhand der Zahlungsanforderungsnachricht das bei dem Bezahlvorgang zu verwendende erste Zahlungssystem ermittelt wird und Kenndaten dieses ersten Zahlungssystems gemeinsam mit den Berechtigungsdaten an das Empfängerendgerät gesendet werden, und anhand der Kenndaten von dem Empfängerendgerät die weitere Zahlungsanforderungsnachricht und die Berechtigungsdaten zu dem ersten Zahlungssystem übertragen werden. Dadurch ist das erfindungsgemäße Verfahren vorteilhafterweise selbst dann durchführbar, wenn auf Seiten des Empfängerendgerätes das von dem Zahlungsschuldner verwendete erste Zahlungssystem nicht von vornherein bekannt ist.

Das erfindungsgemäße Verfahren kann so ablaufen, dass auf die weitere Zahlungsanforderungsnachricht hin von dem ersten Zahlungssystem eine einen Geldmittelausgleich (finanzieller Ausgleich des Bezahlvorganges) zwischen dem Zahlungsschuldner und einem Zahlungsdienstleister des ersten Zahlungssystems veranlassende Datennachricht ausgegeben wird.

Das erfindungsgemäße Verfahren kann auch so ablaufen, dass von dem Empfängerendgerät der Garantie-Datensatz zu dem zweiten Zahlungssystem übertragen wird und daraufhin von dem zweiten Zahlungssystem eine einen Geldmittelausgleich zwischen dem Zahlungsempfänger und einem zweiten Zahlungsdienstleister des zweiten Zahlungssystems veranlassende weitere Datennachricht ausgegeben wird.

Das erfindungsgemäße Verfahren kann so ausgestaltet sein, dass von einem der Zahlungssysteme eine einen Geldmittelausgleich zwischen dem ersten Zahlungsdienstleister des ersten Zahlungssystems und dem zweiten Zahlungsdienstleister des zweiten Zahlungssystems veranlassende dritte Datennachricht ausgegeben wird.

Das erfindungsgemäße Verfahren kann auch so ausgestaltet sein, dass als Berechtigungsdaten eine digitale Signatur zu dem Empfängerendgerät übertragen wird.

Das erfindungsgemäße Verfahren kann so ablaufen, dass mit dem Garantie-Datensatz Informationen zu dem Empfängerendgerät übertragen werden, die eine von dem Zahlungsschuldner an den Zahlungsempfänger zu zahlende Zahlungssumme betreffen. Dadurch wird dem Zahlungsempfänger die Zahlung dieser Zahlungssumme seitens des Zahlungsschuldners garantiert.

Das erfindungsgemäße Verfahren kann auch so ablaufen, dass von dem ersten Zahlungssystem vor der Übertragung des Garantie-Datensatzes zu dem Empfängerendgerät eine Differenzbildung durchgeführt wird, bei der die Zahlungssumme um einen Betrag vermindert wird, welcher für die Benutzung des ersten Zahlungssystems anfällt.

Das erfindungsgemäße Verfahren kann so ablaufen, dass mittels des ersten Zahlungssystems und des zweiten Zahlungssystems zahlungssystemübergreifend ein Bezahlvorgang vorbereitet wird.

Das erfindungsgemäße Verfahren kann auch so ablaufen, dass das zweite Zahlungssystem einem zweiten Kommunikationsnetz zugeordnet ist und mittels des ersten Zahlungssystems und des zweiten Zahlungssystems kommunikationsnetzübergreifend ein Bezahlvorgang vorbereitet wird.

Zur weiteren Erläuterung der Erfindung wird im Folgenden anhand von Figuren ein Ausführungsbeispiel des erfindungsgemäßen Verfahrens beschrieben.

Dabei ist in
Figur 1 eine schematische Darstellung einer Anordnung zur Durchführung des erfindungsgemäßen Verfahrens, in
Figur 2 ein Ausführungsbeispiel von Verfahrensschritten des erfindungsgemäßen Verfahrens und in
Figur 3 ein Ausführungsbeispiel weiterer Verfahrensschritte des erfindungsgemäßen Verfahrens darstellt.

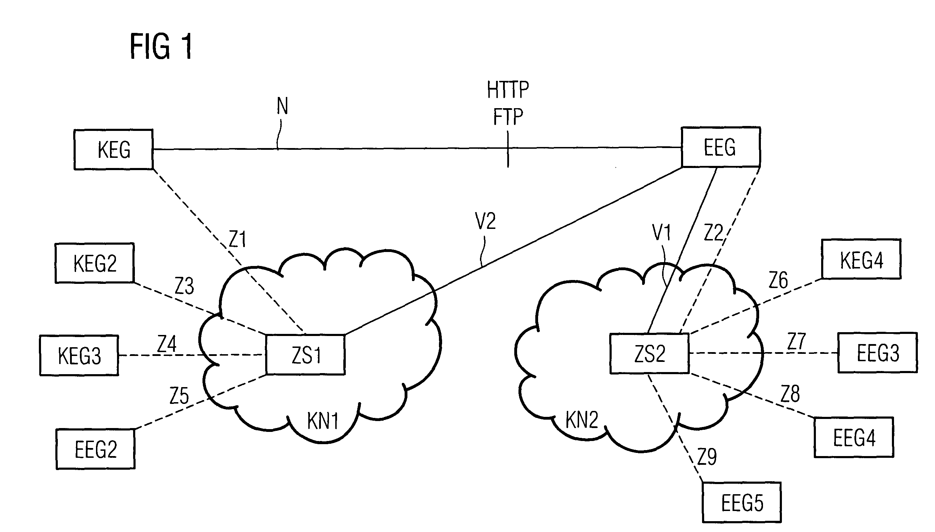

In Figur 1 ist schematisch ein Kommunikationsendgerät KEG eines Zahlungsschuldners dargestellt, welches einem ersten Zahlungssystem ZS1 eines ersten Kommunikationsnetzes KN1 zugeordnet ist. Die Zuordnung ist durch eine gestrichelte Linie Z1 symbolisiert. Das erste Zahlungssystem ZS1 wird von einem ersten (einem Zahlungsschuldner bzw. Kunden zugeordneten) Zahlungsdienstleister, einem sogenannten "Payment-Service-Provider" (PSP) betrieben und bildet in diesem Ausführungsbeispiel einen Bestandteil des ersten Kommunikationsnetzes KN1. Das erste Zahlungssystem ZS1 kann aber genauso gut außerhalb des ersten Kommunikationsnetzes KN1 angeordnet und mit diesem beispielsweise über ein OSA-Gateway verbunden sein. Dem ersten Zahlungssystem ZS1 sind weitere Kommunikationsendgeräte KEG2 und KEG3 zugeordnet (Zuordnungen Z3 und Z4). Auf der rechten Seite der Figur 1 ist ein Empfängerendgerät EEG eines Zahlungsempfängers dargestellt, welches einem zweiten Zahlungssystem ZS2 eines zweiten Kommunikationsnetzes KN2 zugeordnet ist (Zuordnung Z2). Das zweite Zahlungssystem ZS2 ist einem zweiten Zahlungsdienstleister zugeordnet, wobei dieser zweite Zahlungsdienstleister Dienste für den Zahlungsempfänger bzw. Händler erbringt. (In einem anderen Ausführungsbeispiel kann dieses zweite Zahlungssystem aber z.B. auch dem ersten Zahlungsdienstleister zugeordnet sein, der auch das erste Zahlungssystem ZS1 betreibt.) Dem zweiten Zahlungssystem ZS2 ist auch ein weiteres Kommunikationsendgerät KEG4 zugeordnet; ebenso sind dem zweiten Zahlungssystem ZS2 weitere Empfängerendgeräte EEG3, EEG4 und EEG5 zugeordnet (Zuordnungen Z7, Z8 und Z9). Ein derartiges weiteres Empfängerendgerät EEG2 ist auch dem ersten Zahlungssystem ZS1 zugeordnet (Zuordnung Z5). Von dem Kommunikationsendgerät KEG des Zahlungsschuldners wird über einen Nutzkanal N eine Dienstleistung oder eine Ware von dem Empfängerendgerät EEG des Zahlungsempfängers abgefordert. Der Nutzkanal N kann mittels Datenverbindungen oder geeigneten Kommunikationsprotokollen, z. B. mittels HTTP (hypertext transfer protocol) oder FTP (file transfer protocol) realisiert werden. Der Nutzkanal N kann aber auch durch eine einfache Telefonverbindung oder eine andere akustische Sprachsignalübertragung zwischen Zahlungsschuldner und Zahlungsempfänger realisiert sein. Im weiteren Verlauf des Verfahrens kann von dem Empfängerendgerät EEG eine erste Verbindung V1 (beispielsweise eine Nachrichtenverbindung, Datenverbindung) zu dem zweiten Zahlungssystem ZS2, welches dem Zahlungsempfänger zugeordnet ist, aufgebaut werden. Ebenso kann von dem Empfängerendgerät eine zweite Verbindung V2 zu dem ersten Zahlungssystem ZS1, welches dem Zahlungsschuldner zugeordnet ist, aufgebaut werden.

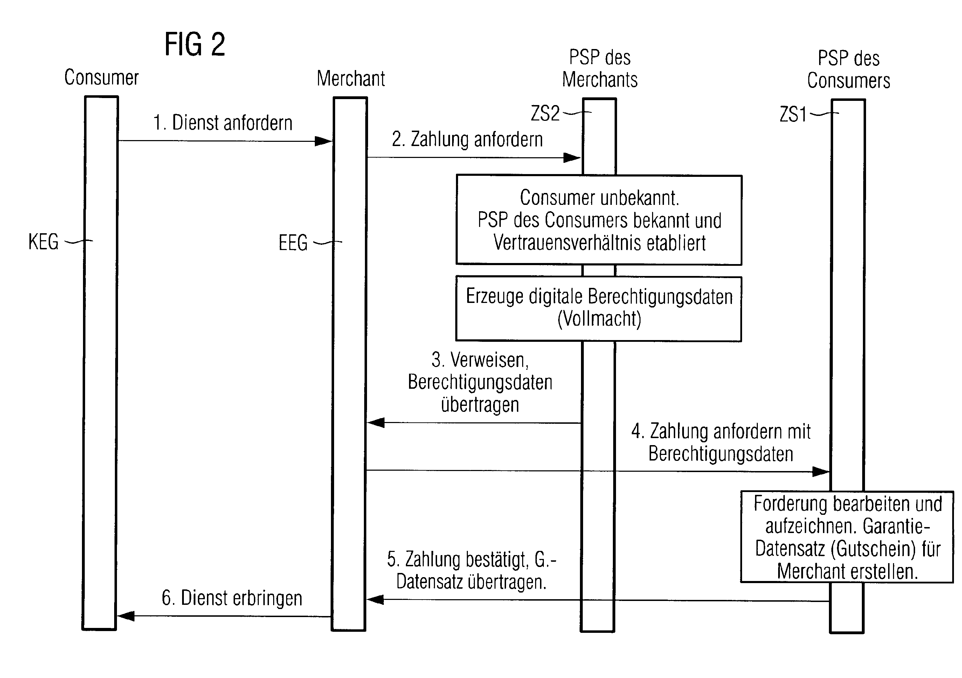

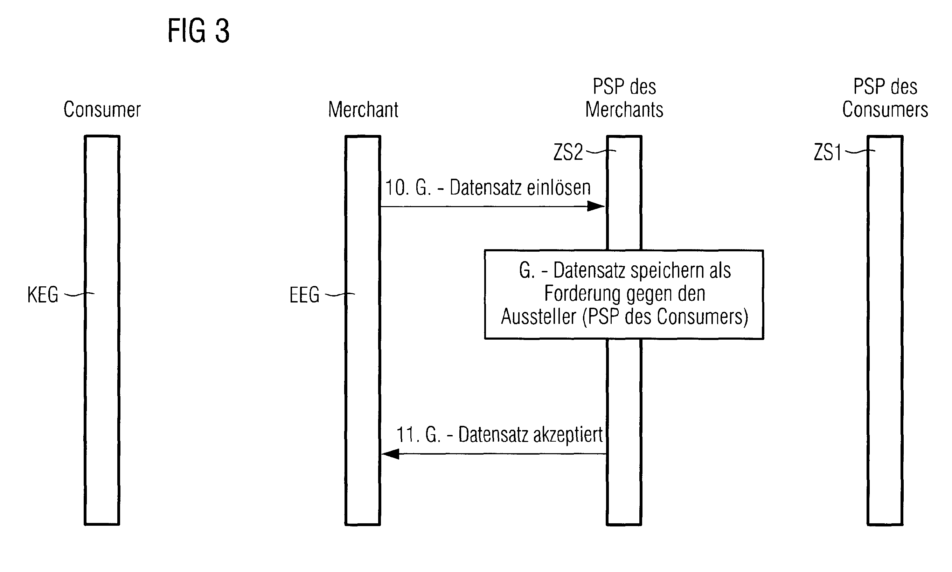

Für die erste Verbindung V1 und die zweite Verbindung V2 können die gleichen Kommunikationsprotokolle benutzt werden. Für diese beiden virtuellen Verbindungen können bereits existierende Kommunikationsprotokolle, wie z. B. "Parlay content based charging" eingesetzt werden, wobei ggf. geringe Erweiterungen (beispielsweise Nutzen von bisher nicht belegten Datenfeldern für zu übertragende zusätzliche Daten) vorgenommen werden. Zur Durchführung des erfindungsgemäßen Verfahrens braucht dann also vorteilhafterweise zwischen dem ersten Zahlungssystem ZS1 und dem zweiten Zahlungssystems ZS2 keine neue Kommunikationsverbindung etabliert werden und demzufolge auch kein neues Kommunikationsprotokoll zwischen beiden angewendet werden. Es muss lediglich sichergestellt sein, dass von dem zweiten Zahlungssystem ZS2 erzeugte Berechtigungsdaten (vgl. die unten im Zusammenhang mit der Figur 2 angegebenen Erläuterungen) von dem ersten Zahlungssystem ZS1 akzeptiert werden. Dies kann leicht durch einen im Vorfeld zwischen den Payment-Service-Providern der Zahlungssysteme geschlossenen Vertrag oder durch Erweiterung eines vorhandenen Roaming-Agreements erreicht werden. Der Aufbau der Verbindungen V1 und V2 wird unten anhand der Figuren 2 und 3 detailliert erläutert. In Figur 1 ist der Fall dargestellt, dass sich die beiden Zahlungssysteme in verschiedenen Kommunikationsnetzen befinden und daher nicht nur zahlungssystemübergreifend (unter Einbeziehung mehrerer Zahlungsdienstleister), sondern sogar kommunikationsnetzübergreifend ein Bezahlvorgang vorbereitet wird.

In Figur 2 sind die bei den einzelnen Endgeräten und Zahlungssystemen ablaufenden Verfahrensschritte dargestellt. Figur 2 zeigt linksseitig schematisch dargestellt das Kommunikationsendgerät KEG, welches einem Kunden (Consumer) zugeordnet ist bzw. von diesem betrieben wird. Rechtsseitig daneben ist das Empfängerendgerät EEG eines Händlers (Merchant) dargestellt. Rechts daran anschließend ist das zweite Zahlungssystem ZS2 symbolisiert, welches von einem Payment-Service-Provider PSP des Händlers betrieben wird. Rechtsseitig in Figur 2 ist das erste Zahlungssystem ZS1 abgebildet, welches von einem anderen Payment-Service-Provider, nämlich dem Payment-Service-Provider des Kunden betrieben wird und also diesem Kunden zugeordnet ist.

Als ersten Schritt nimmt der Kunde mittels des Kommunikationsendgerätes KEG Kontakt zu dem Empfängerendgerät EEG des Händlers auf, um einen Dienst oder eine Dienstleistung zu nutzen. Dabei wird eine Dienstanforderungsnachricht 1 (Pfeil 1. "Dienst anfordern") vom Kommunikationsendgerät des Kunden (des Zahlungsschuldners) an das Empfängerendgerät des Händlers (des Zahlungsempfängers) gesendet. Bereits im Vorfeld erhielt der Kunde über sein Kommunikationsendgerät KEG eine Dienstauswahl präsentiert (in der Figur nicht dargestellt), mittels des Kommunikationsendgerätes KEG wird eine Ware oder Dienstleistung ausgewählt und zur Lieferung über den Nutzkanal N (vgl. Figur 1) angefordert. Vor Lieferung der Ware oder Dienstleistung soll auf Seiten des Händlers jedoch sichergestellt sein, dass diese Ware oder Dienstleistung von den Kunden auch bezahlt werden wird. Daher wird von dem Empfängerendgerät EEG des Zahlungsempfängers eine den Zahlungsschuldner betreffende Zahlungsanforderungsnachricht 2 (Pfeil 2. "Zahlung anfordern") über die erste Verbindung V1 (vgl. Figur 1) an das zweite Zahlungssystem ZS2 gesendet. Das zweite Zahlungssystem ZS2 fragt aus einer Datenbank (in der Figur 2 nicht dargestellt) ab, ob eine Vertragsbeziehung zwischen dem zweiten Zahlungssystem ZS2 und dem Kunden, welcher von der Zahlungsanforderungsnachricht betroffen ist, besteht. In diesem Ausführungsbeispiel erhält das zweite Zahlungssystem ZS2 aus der Datenbank die Information, dass keine Vertragsbeziehung mit dem Kunden besteht ("Consumer unbekannt"). Daher kann das zweite Zahlungssystem ZS2 keinen Bezahlvorgang mit dem Kunden durchführen, es kann also die Zahlungsanforderung nicht direkt abrechnen. Aus der Datenbank liest das zweite Zahlungssystem ZS2 auch die Information aus, dass der Kunde bzw. dessen Kommunikationsendgerät KEG dem ersten Zahlungssystem ZS1 zugeordnet ist. Ebenso ist in der Datenbank die Information abgelegt, dass ein Vertrauensverhältnis zwischen dem ersten Zahlungssystem ZS1 bzw. dem Payment-Service-Provider des Kunden und dem zweiten Zahlungssystem ZS2 bzw. dem Payment-Service-Provider des Händlers besteht ("PSP des Consumers bekannt und Vertrauensverhältnis etabliert"). Ein derartiges Vertrauensverhältnis kann beispielsweise aufgrund von zuvor abgeschlossenen Verträgen oder bereits lange bestehenden Geschäftsbeziehungen bestehen. Daher akzeptieren die beiden Zahlungssysteme ZS1 und ZS2 gegenseitig Zahlungen bzw. Zahlungen oder Bezahlvorgänge betreffende Nachrichten des jeweils anderen Zahlungssystems. Das zweite Zahlungssystem ZS2 erzeugt daraufhin Berechtigungsdaten ("Erzeuge digitale Berechtigungsdaten (Vollmacht)"), welche der Zahlungsanforderungsnachricht 2 zugeordnet sind. Derartige Berechtigungsdaten können auch als eine "digitale Vollmacht" verstanden werden. Diese Berechtigungsdaten enthalten beispielsweise eine Auswahl folgender Informationen:
- Identität des zweiten Zahlungssystems ZS2 bzw. des dieses zweite Zahlungssystem betreibenden Payment-Service-Providers,
- Identität des Händlers,
- Identität des ersten Zahlungssystems ZS1 bzw. des dieses Zahlungssystem betreibenden Payment-Service-Providers des Kunden,
- Identität des Kunden,
- Ablaufdatum für die Gültigkeit der Berechtigungsdaten.

Weiterhin können die Berechtigungsdaten Informationen enthalten, die für das Zahlungssystem ZS1 von Belang sind, wie z. B. Gebühren für die Ausführung des Bezahlvorganges, die seitens des zweiten Zahlungssystems für die Abwicklung es Bezahlvorganges erhoben werden, oder eine maximal zulässige Zahlungs-Forderungshöhe. Das zweite Zahlungssystem ZS2 signiert die Berechtigungsdaten und verwendet dazu beispielsweise einen privaten Schlüssel eines an sich bekannten asymmetrischen Signierverfahrens, d. h., eines Signierverfahrens, welches unter Benutzung eines privaten (geheimen) Schlüssels und eines öffentlichen (nicht geheim zu haltenden) Schlüssels durchgeführt wird. Daraufhin sendet das zweite Zahlungssystem ZS2 eine Verweisungsnachricht (Pfeil 3. "Verweisen, Berechtigungsdaten übertragen") an das Empfängerendgerät EEG des Händlers, wobei mit der Verweisungsnachricht dem Empfängerendgerät die Information übermittelt wird, dass eine direkte Ausführung des Bezahlvorganges mit dem jeweiligen Zahlungsschuldner (Kunden) nicht realisiert werden kann. Dem Empfängerendgerät wird ebenfalls die Information übermittelt, dass das erste Zahlungssystem ZS1 bekannt ist, welches für Zahlungen mit dem Kunden zuständig ist. Gleichzeitig werden dem Empfängerendgerät Kenndaten dieses ersten Zahlungssystems (z. B. eine Adresse des ersten Zahlungssystems ZS1 bzw. des Payment-Service-Providers) übermittelt. Derartige Kenndaten sind nämlich ebenfalls in der o. g. Datenbank abgelegt und werden von dem zweiten Zahlungssystem ZS2 aus dieser Datenbank ausgelesen. Mit der Verweisnachricht 3 werden auch die Berechtigungsdaten an das Empfängerendgerät EEG übertragen. Das Empfängerendgerät EEG sendet nun unter Nutzung der erhaltenen Kenndaten eine weitere Zahlungsanforderungsnachricht (Pfeil 4. "Zahlung anfordern mit Berechtigungsdaten") zusammen mit den Berechtigungsdaten an das erste Zahlungssystem ZS1. Diese Datenübertragung erfolgt über die zweite Verbindung V2 (vgl. Figur 1). Das erste Zahlungssystem ZS1 überprüft daraufhin die Berechtigungsdaten auf eines oder mehrere die folgenden Kriterien hin:
- Echtheit, d. h. wurden die Berechtigungsdaten (die Vollmacht) wirklich von dem Payment-Service-Provider ausgestellt, der als ausstellender Payment-Service-Provider angegeben ist? Zur Durchführung dieser Überprüfung wird die Signatur mit dem öffentlichen Schlüssel des ausstellenden Payment-Service-Providers überprüft.
- Integrität, d. h. wurden die Berechtigungsdaten nach dem Erstellen nicht verändert? Dies wird ebenfalls anhand der Signatur der Berechtigungsdaten überprüft.
- Sind die Berechtigungsdaten für das erste Zahlungssystem ZS1 bestimmt?
- Besteht eine Vertragsbeziehung zwischen dem ersten Zahlungssystem ZS1 und dem zweiten Zahlungssystem ZS2, d. h., kann das erste Zahlungssystem ZS1 mit dem zweiten Zahlungssystem ZS2 Forderungen abrechnen?
- Sind die Berechtigungsdaten für den Kunden gültig, den die weitere Zahlungsanforderungsnachricht betrifft?
- Sind die Berechtigungsdaten noch nicht abgelaufen, d. h., ist das Gültigkeitsdatum noch nicht überschritten?
- In Abhängigkeit von der o. g. Vertragsbeziehung zwischen den Zahlungssystemen bzw. den zugehörigen Payment-Service-Providern kann weiterhin überprüft werden, ob der ausstellende Payment-Service-Provider die Forderungshöhe begrenzt hat oder ob er Gebühren für die Durchführung des Bezahlvorganges fordert. Diese Gebühren können z. B. auf den Kunden umgelegt werden, d. h. der Payment-Service-Provider des Kunden wird mittels seines ersten Zahlungssystems ZS1 vom Kunden eine größere Zahlungssumme fordern alles der Händler mittels der Zahlungsanforderungsnachricht 2 ursprünglich verlangt hat.

In einem weiteren Ausführungsbeispiel des erfindungsgemäßen Verfahrens können auch die Berechtigungsdaten selbst durch eine digitale Signatur gebildet werden. In diesem Fall berechnet das zweite Zahlungssystem ZS2 diese Signatur aus solchen Informationsdaten, die sowohl in der ersten Zahlungsanforderungsnachricht enthalten waren und später auch mittels der weiteren Zahlungsanforderungsnachricht an das erste Zahlungssystem gesendet werden. Diese Signatur wird dann als Berechtigungsdaten gemeinsam mit der weiteren Zahlungsanforderungsnachricht an das erste Zahlungssystem ZS1 übertragen. Das erste Zahlungssystem kann dann mittels der Signatur überprüfen, ob von dem Empfängerendgerät in der weiteren Zahlungsanforderungsnachricht tatsächlich die Informationsdaten übertragen wurden, für die das zweite Zahlungssystem ZS2 die Berechtigungsdaten erteilt bzw. die Signatur erstellt hat. Alternativ können die Berechtigungsdaten auch durch eine nur für einen einzigen Bezahlvorgang gültige Transaktionsnummer gebildet werden.

Wenn in dem erstgenannten Ausführungsbeispiel die Überprüfung der Berechtigungsdaten (bzw. in dem weiteren Ausführungsbeispiel die Überprüfung der mit der weiteren Zahlungsanforderungsnachricht übermittelten Informationsdaten unter Benutzung der Berechtigungsdaten in Form der digitalen Signatur) mit positivem Überprüfungsergebnis abgeschlossen ist (also die Korrektheit der Berechtigungsdaten bzw. die Korrektheit der Informationsdaten festgestellt wurde), kann das erste Zahlungssystem ZS1 fakultativ weitere den Bezahlvorgang betreffende Prüfungen und Aktionen vornehmen. Dazu kann es z. B. die Bonität des Kunden durch Abfrage einer entsprechenden Datenbank prüfen oder interaktiv die Zustimmung des Kunden einholen. Diese Vorgänge sind in der Figur 2 nicht dargestellt. Nach erfolgreichem Abschluss der Überprüfung erstellt das erste Zahlungssystem ZS1 einen Garantie-Datensatz ("Forderung bearbeiten und aufzeichnen. Datensatz (Gutschein) für Merchant erstellen"), der einen digitalen "Gutschein" für den Händler darstellt, wobei der Garantie-Datensatz folgende Informationen enthält:
- Höhe des Zahlungsbetrages, für den das erste Zahlungssystem ZS1 die Zahlung an den Zahlungsschuldner garantiert,
- Zahlungsempfänger, für den der Garantie-Datensatz ausgestellt wurde,
- Zahlungsschuldner, für den die Leistung bzw. der Dienst erbracht wurde,
- Zahlungssystem bzw. Payment-Service-Provider, der den Garantie-Datensatz ausgestellt hat,
- Verfallsdatum des Garantie-Datensatzes

Falls eine Zahlungsgebühr für die Benutzung des ersten Zahlungssystems anfällt, so kann das erste Zahlungssystem vor dem Erstellen des Garantie-Datensatzes eine mathematische Differenzbildung vornehmen, bei der die Zahlungssumme (Zahlbetrag) um einen der Gebühr entsprechenden Betrag vermindert wird.

Der Payment-Service-Provider des Zahlungsschuldners bzw. das erste Zahlungssystem ZS1 signiert den Garantie-Datensatz mit seinem privaten Schlüssel eines asymmetrischen Signierverfahrens. Die relevanten Informationen über die Erstellung dieses Garantie-Datensatzes werden zusammen mit weiteren Informationen der weiteren Zahlungsanforderungsnachricht in dem ersten Zahlungssystem ZS1 aufgezeichnet (gespeichert), um später auf konventionellem Wege einen Geldmittelausgleich z.B. zwischen dem Zahlungsdienstleister des Zahlungsschuldners und dem Zahlungsdienstleister des Zahlungsempfängers herbei zu führen. Danach sendet das erste Zahlungssystem ZS1 an das Empfängerendgerät EEG eine Nachricht, dass die Zahlung seitens des Zahlungsschuldners akzeptiert wurde. Gemeinsam mit dieser Nachricht wird auch der Garantie-Datensatz an das Empfängerendgerät EEG übermittelt (Pfeil 5 "Zahlung bestätigt, Garantie-Datensatz (Gutschein) übertragen"). Dadurch ist für das Empfängerendgerät und für den Zahlungsempfänger die Zahlung des Zahlungsschuldners garantiert, der Zahlungsempfänger hat also die Garantie, dass er bei einem späteren Geldmittelausgleich (finanziellen Ausgleich), beim eigentlichen Bezahlvorgang, sein Geld erhalten wird. Demzufolge kann der Zahlungsempfänger mittels seines Empfängerendgerätes nun den Dienst erbringen (Pfeil 6 "Dienst erbringen"), also beispielsweise die mittels der Dienstanforderungsnachricht 1 angeforderten Daten an das Kommunikationsendgerät des Zahlungsschuldners übertragen. Durch dieses Verfahren ist also sichergestellt, dass der Zahlungsschuldner bei dem Geldmittelausgleich (der nicht sofort stattfinden muss, sondern vorteilhafterweise später, z. B. am Ende eines vorbestimmten Abrechnungszeitraumes auf konventionellem Geldüberweisungswege erfolgen kann) sein Entgelt für die Dienstnutzung erhält.

In Figur 3 sind weitere Verfahrensschritte des erfindungsgemäßen Verfahrens dargestellt. Nachdem der Garantie-Datensatz beim Empfängerendgerät EEG eingetroffen ist, kann von diesem Empfängerendgerät EEG der Garantie-Datensatz an das zweite Zahlungssystem ZS2 übertragen werden (der "Gutschein" kann sozusagen eingelöst werden). Dies ist in der Figur 3 mittels des Pfeiles 10 ("Garantie-Datensatz einlösen") dargestellt. Diese Datenübertragung 10 kann unmittelbar nach Eintreffen des Garantie-Datensatzes bei dem Empfängerendgerät (also beispielsweise schon während der Diensterbringung 6) oder auch zu einem späteren Zeitpunkt erfolgen. Bei der Wahl des Zeitpunktes ist jedoch darauf zu achten, dass der Verfallszeitpunkt des Garantie-Datensatzes noch nicht überschritten ist. Dies kann beispielsweise durch eine regelmäßige Einlösung sämtlicher eingetroffener Gutscheine jeweils bei Ablauf vorbestimmter Zeitperioden geschehen. Es ist beispielsweise vorteilhaft, wenn seitens des Empfängerendgerätes die im Verlaufe eines Tages eintreffenden Garantie-Datensatz-Gutscheine gesammelt werden und nachts, d. h. zu verkehrsarmen Zeiten, diese Datensätze zu dem zweiten Zahlungssystem ZS2 übertragen werden. Der Zeitpunkt der Übertragung der Nachrichten 10 kann insbesondere in einem Vertrag zwischen dem Händler und dem Payment-Service-Provider des zweiten Zahlungssystems ZS2 festgelegt sein. Auf diese Art und Weise kann die Auslastung des zweiten Zahlungssystems ZS2 positiv beeinflusst werden, indem eine gleichmäßige Auslastung sowohl tags als auch nachts erreicht wird.

Es ist ein besonderer Vorteil des erfindungsgemäßen Verfahrens, dass die Einlösung der Datensätze beim zweiten Zahlungssystem nicht in Echtzeit erfolgen muss, also keine Echtzeitanforderungen für die Einlösung bestehen. Dadurch ergibt sich ein besonders einfach zu realisierendes Verfahren, was sich auch in geringen Verfahrenskosten niederschlägt.

Mit dem Übertragen des Garantie-Datensatzes 10 wird von dem Empfängerendgerät des Händlers dem zweiten Zahlungssystem mitgeteilt, welche Forderungen des Händlers aus der Diensterbringung resultieren. Diese Forderung wird das zweite Zahlungssystem ZS2 mit dem Händler später finanziell ausgleichen. Das zweite Zahlungssystem ZS2 speichert den Garantie-Datensatz (Gutschein); dieser Gutschein beinhaltet Informationen einer finanziellen Forderung gegen den Aussteller des Garantie-Datensatzes, also gegen das erste Zahlungssystems ZS1 bzw. gegen dessen Payment-Service-Provider. Diese Forderung wird ebenfalls z. B. bei Ablauf eines entsprechenden Abrechnungszeitraumes ausgeglichen werden. Das Ausgleichen der Forderungen kann dann unter Nutzung von heute allgemein gebräuchlichen Geldtransaktionswegen erfolgen, beispielsweise also durch Geldüberweisung, Übersendung eines Schecks oder Kreditkartenbelastung. Derartige finanzielle Ausgleichsvorgänge werden sowohl von dem ersten Zahlungssystem ZS1 als auch von dem zweiten Zahlungssystem ZS2 jeweils dadurch veranlasst, dass eine entsprechende Datennachricht ausgegeben wird und z. B. zu einem Transaktionsrechner eines sogenannten Clearinghouses, einer Bank oder einer Kreditkartenorganisation übertragen wird. Auf diese Art und Weise werden ggf. zu einem späteren Zeitpunkt ein finanzieller Ausgleich des Bezahlungsvorganges zwischen dem Zahlungsschuldner und dem ersten Zahlungsdienstleister des ersten Zahlungssystems, zwischen dem Zahlungsempfänger und dem zweiten Zahlungsdienstleister des zweiten Zahlungssystems, und zwischen dem ersten Zahlungsdienstleister und dem zweiten Zahlungsdienstleister veranlasst.

Bevor jedoch diese finanziellen Ausgleichsvorgänge erfolgen, überprüft das zweite Zahlungssystem ZS2 den Garantie-Datensatz daraufhin, ob er gültig ist. Dabei kann im Einzelnen überprüft werden:
- Die Originalität des Garantie-Datensatzes: Stimmt der im Garantie-Datensatz genannte Aussteller mit dem Erzeuger der Signatur überein? Dies wird mittels des öffentlichen Schlüssels des Ausstellers unter Benutzung des asymmetrischen Signierverfahrens überprüft.
- Integrität: Ist der Garantie-Datensatz nach dem Signieren nicht verändert worden?
- Stimmt der Händler, von dessen Empfängerendgerät der Garantie-Datensatz übermittelt wird (also der Händler, der den "Gutschein" einlöst) mit dem im Garantie-Datensatz genannten Händler überein?
- Entspricht der geforderte Betrag den Obergrenzen, die der Payment-Service-Provider des Händlers und der Payment-Service-Provider des Kunden für derartige Datensätze z. B. vertraglich vereinbart haben?
- Ist die Gültigkeitsdauer des Garantie-Datensatzes noch nicht abgelaufen?

Wenn diese Überprüfungen erfolgreich abgeschlossen sind, so akzeptiert das zweite Zahlungssystem ZS2 den Garantie-Datensatz, speichert - wie oben bereits erwähnt - die mit dem Garantie-Datensatz übertragenen Informationen für einen späteren finanziellen Ausgleich (ein sogenanntes Clearing-Verfahren) ab. Daraufhin sendet das zweite Zahlungssystem ZS2 eine Akzeptanznachricht 11 an das Empfängerendgerät EEG zurück; mit der Akzeptanznachricht wird der Zahlungsempfänger über das Akzeptieren des Garantie-Datensatzes, also das Akzeptieren des Gutscheins informiert (Pfeil 11 "Garantie-Datensatz akzeptiert").

Der Payment-Service-Provider des Händlers speichert also den im Garantie-Datensatz genannten Betrag als Forderung des Händlers gegen den Payment-Service-Provider des Händlers. Weiterhin speichert der Payment-Service-Provider des Händlers den gleichen Betrag als Forderung gegen den Payment-Service-Provider des Kunden. Diese Forderungen werden z. B. am Ende eines jeweils vereinbarten Abrechnungszeitraumes ausgeglichen. Nachdem auch der Payment-Service-Provider des Kunden seine Forderung gegen den Kunden ausgeglichen hat, ist der Bezahlvorgang abgeschlossen.

Das erfindungsgemäße Verfahren hat insbesondere den Vorteil, dass die die Einlösung des Garantie-Datensatzes betreffenden Nachrichten nicht in Echtzeit zu dem zweiten Zahlungssystem ZS2 übertragen werden brauchen und auch Antwortnachrichten des zweiten Zahlungssystems ZS2 nicht in Echtzeit an das Empfängerendgerät des Händlers übertragen werden brauchen. Vielmehr können diese Nachrichten zu einem späteren, frei wählbaren Zeitpunkt übertragen werden, da die Vorgänge des Einlösens des Garantie-Datensatzes, der Kontrolle des Garantie-Datensatzes durch das zweite Zahlungssystem ZS2 und des Übersendens der Garantie-Datensatzakzeptanznachricht an das Empfängerendgerät zu einem frei wählbaren Zeitpunkt erfolgen kann. Dadurch wird auch das zweite Zahlungssystem entlastet und kann für einen geringeren Datendurchsatz pro Zeiteinheit ausgelegt werden, so dass dieses zweite Zahlungssystem ZS2 mit einem vergleichsweise geringen Hardwareaufwand und damit auch kostengünstig realisiert werden kann. Es ist ebenfalls vorteilhaft, dass bei dem Verfahren zum Vorbereiten eines Bezahlvorganges eine direkte Kommunikation zwischen dem ersten Zahlungssystem ZS1 und dem zweiten Zahlungssystem ZS2 nicht notwendig ist.

Wenn die beiden Kommunikationsnetze KN1 und KN2 durch Mobilfunknetze gebildet werden und der Payment-Service-Provider des ersten Zahlungssystems ZS1 und der Payment-Service-Provider des zweiten Zahlungssystems ZS2 gleichzeitig Mobilfunkanbieter sind, dann kann vorteilhafterweise für die oben beschriebenen finanziellen Ausgleichsvorgänge des Bezahlvorganges auf als solche bereits bekannte TAP-Prozeduren zurückgegriffen werden. Mit derartigen TAP-Prozeduren werden normalerweise Roaming-Gebühren abgerechnet. Erfindungsgemäß können an sich bekannte und damit ohne große Änderungen an den Kommunikationsnetzen einsetzbare TAP-Records zum finanziellen Ausgleich des Bezahlvorganges (z. B. in einem sogenannten Clearing-Haus) verwendet werden. Dann werden durch den Payment-Service-Provider des Händlers die Forderungen, die dem eingelösten Gutschein des Händlers entsprechen, so behandelt, als hätte der Kunde im Mobilfunknetz des Payment-Service-Providers des Händlers (in dem Falle also des Mobilfunkanbieters dieses Mobilfunknetzes) im entsprechenden Wert Mobiltelefonate geführt.

Bei dem erfindungsgemäßen Verfahren ist weiterhin besonders vorteilhaft, dass das Empfängerendgerät des Händlers zu Beginn des erfindungsgemäßen Verfahrens lediglich in der Lage sein muss, eine Kommunikation mit dem zweiten Zahlungssystem ZS2 (also mit dem ihm zugeordneten Zahlungssystem) durchzuführen. Das zweite Zahlungssystem ZS2 ermittelt dann seinerseits das bei dem Bezahlvorgang weiterhin zu verwendende erste Zahlungssystem ZS1, und sendet Kenndaten des ersten Zahlungssystems ZS1 gemeinsam mit den Berechtigungsdaten an das Empfängerendgerät. Dadurch wird das Empfängerendgerät in die Lage versetzt, im Folgenden auch Kommunikationsvorgänge mit dem ersten Zahlungssystem ZS1 durchzuführen. Auf Seiten des Empfängerendgerätes müssen jedoch im Vorfeld die Kenndaten des ersten Zahlungssystems ZS1 nicht bekannt sein. Das Empfängerendgerät braucht sich im Vorfeld auch nicht bei dem ersten Zahlungssystem ZS1 zu registrieren. Es ist seitens des Empfängerendgerätes EEG lediglich eine einzige Registrierung bei dem zweiten Zahlungssystem ZS2 notwendig, wodurch sich für den einzelnen Händler das Verfahren sehr einfach gestaltet. Dennoch wird dem Händler mittels dessen Empfängerendgerätes ermöglicht, auch Bezahlvorgänge mit Kunden, welche sich bei anderen Zahlungssystemen registriert haben, durchzuführen.

Es ist ein wesentliches Merkmal des erfindungsgemäßen Verfahrens, dass der Händler seine Forderungen gegen den Kunden mittels seines Empfängerendgerätes direkt dem ersten Zahlungssystem ZS1 des Kunden übermittelt. Es ist jedoch keine Registrierung des Empfängerendgerätes bzw. des Händlers bei dem ersten Zahlungssystem ZS1 notwendig, da sich das Empfängerendgerät des Händlers mit Hilfe der Berechtigungsdaten (der digitalen Vollmacht) beim ersten Zahlungssystem ZS1 des Kunden als vertrauenswürdig ausweisen kann. Diese Berechtigungsdaten werden vom zweiten Zahlungssystem ZS2 des Händlers erstellt. Damit das erste Zahlungssystem ZS1 des Kunden diese Berechtigungsdaten anerkennt, muss ein sogenanntes "Vertrauensverhältnis" zwischen dem ersten Zahlungssystem ZS1 und dem zweiten Zahlungssystem ZS2 bestehen. Ein derartiges Vertrauensverhältnis kann durch einen vorab geschlossenen Vertrag begründet sein, wobei sowohl das erste Zahlungssystem ZS1 als auch das zweite Zahlungssystems ZS2 in entsprechenden Datenbanken Informationen über das bestehende Vertrauensverhältnis abgespeichert haben.

Es ist weiterhin ein wesentliches Merkmal des erfinderungemäßen Verfahrens, dass das erste Zahlungssystem ZS1 des Kunden einen Garantie-Datensatz (einen digitalen Gutschein) über die Forderung des Händlers gegenüber dem Kunden, also über die Forderung des Zahlungsempfängers gegenüber dem Zahlungsschuldner erstellt und diesen Gutschein an das Empfängerendgerät des Händlers sendet. Das Empfängerendgerät des Händlers kann diesen Garantie-Datensatz zu einem späteren Zeitpunkt bei dem zweiten Zahlungssystem ZS2 des Händlers einlösen. Das zweite Zahlungssystem ZS2 des Händlers kann daraufhin diesen Garantie-Datensatz zu einem späteren Zeitpunkt mit dem ersten Zahlungssystem ZS1 des Kunden abrechnen, d. h. einen finanziellen Ausgleich des Bezahlvorganges, ein sogenanntes Clearing, vornehmen. Durch die erfindungsgemäße Verwendung des Garantie-Datensatzes wird die Vorbereitung des Bezahlvorganges ermöglicht, obwohl das Empfängerendgerät des Händlers nicht direkt mit dem zweiten Zahlungssystem ZS2 des Kunden eine Abrechnung vornehmen kann und somit aus dem Bezahlvorgang auch keine direkte Forderung des Händlers gegen das erste Zahlungssystems ZS1 des Kunden erstellt werden kann.

## Patentansprüche

1. Verfahren zum Vorbereiten eines Bezahlvorganges mittels eines Kommunikationsendgerätes (KEG) eines Zahlungsschuldners und eines Empfängerendgerätes (EEG) eines Zahlungsempfängers, wobei das Kommunikationsendgerät (KEG) einem ersten Zahlungssystem (ZS1) eines ersten Kommunikationsnetzes (KN1) und das Empfängerendgerät (EEG) einem zweiten Zahlungssystem (ZS2) zugeordnet (Z2) ist, bei dem
- auf eine den Zahlungsschuldner betreffende Zahlungsanforderungsnachricht (2) des Empfängerendgerätes (EEG) hin von dem zweiten Zahlungssystem (ZS2) der Zahlungsanforderungsnachricht (2) zugeordnete Berechtigungsdaten erstellt und an das Empfängerendgerät (EEG) gesendet werden,
- von dem Empfängerendgerät (EEG) eine weitere Zahlungsanforderungsnachricht zusammen mit den Berechtigungsdaten zu dem ersten Zahlungssystem (ZS1) übertragen wird,
- von dem ersten Zahlungssystem (ZS1) anhand der Berechtigungsdaten überprüft wird, ob der Zahlungsempfänger zur Teilnahme an dem Bezahlvorgang berechtigt ist, und gegebenenfalls daraufhin
- von dem ersten Zahlungssystem (ZS1) ein die zahlungsschuldnerseitige Zahlung garantierender Garantie-Datensatz zu dem Empfängerendgerät (EEG) übertragen wird.

2. Verfahren nach Anspruch 1,
**dadurch gekennzeichnet, dass**
- von dem zweiten Zahlungssystem (ZS2) anhand der Zahlungsanforderungsnachricht das bei dem Bezahlvorgang zu verwendende erste Zahlungssystem (ZS1) ermittelt wird und Kenndaten dieses ersten Zahlungssystems (ZS1) gemeinsam mit den Berechtigungsdaten (B) an das Empfängerendgerät (EEG) gesendet werden, und
- anhand der Kenndaten von dem Empfängerendgerät (EEG) die weitere Zahlungsanforderungsnachricht und die Berechtigungsdaten zu dem ersten Zahlungssystem (ZS1) übertragen werden.

3. Verfahren nach Anspruch 1 oder 2,
**dadurch gekennzeichnet, dass**
- auf die weitere Zahlungsanforderungsnachricht hin von dem ersten Zahlungssystem (ZS1) eine einen Geldmittelausgleich zwischen dem Zahlungsschuldner und einem ersten Zahlungsdienstleister des ersten Zahlungssystems (ZS1) veranlassende Datennachricht ausgegeben wird.

4. Verfahren nach einem der Ansprüche 1 bis 3,
**dadurch gekennzeichnet, dass**
- von dem Empfängerendgerät (EEG) der Garantie-Datensatz zu dem zweiten Zahlungssystem (ZS2) übertragen wird und daraufhin von dem zweiten Zahlungssystem (ZS2) eine einen Geldmittelausgleich zwischen dem Zahlungsempfänger und einem zweiten Zahlungsdienstleister des zweiten Zahlungssystems (ZS2) veranlassende weitere Datennachricht ausgegeben wird.

5. Verfahren nach einem der vorhergehenden Ansprüche,
**dadurch gekennzeichnet, dass**
- von einem der Zahlungssysteme (ZS1, ZS2) eine einen Geldmittelausgleich zwischen dem ersten Zahlungsdienstleister des ersten Zahlungssystems (ZS1) und dem zweiten Zahlungsdienstleister des zweiten Zahlungssystems (ZS2) veranlassende dritte Datennachricht ausgegeben wird.

6. Verfahren nach einem der vorhergehenden Ansprüche,
**dadurch gekennzeichnet, dass**
- als Berechtigungsdaten eine digitale Signatur zu dem Empfängerendgerät (EEG) übertragen wird.

7. Verfahren nach einem der vorhergehenden Ansprüche,
**dadurch gekennzeichnet, dass**
- mit dem Garantie-Datensatz Informationen zu dem Empfängerendgerät (EEG) übertragen werden, die eine von dem Zahlungsschuldner an den Zahlungsempfänger zu zahlende Zahlungssumme betreffen.

8. Verfahren nach Anspruch 7,
**dadurch gekennzeichnet, dass**
- von dem ersten Zahlungssystem (ZS1) vor der Übertragung des Garantie-Datensatzes zu dem Empfängerendgerät (EEG) eine Differenzbildung durchgeführt wird, bei der die Zahlungssumme um einen Betrag vermindert wird, welcher für die Benutzung des ersten Zahlungssystems (ZS1) anfällt.

9. Verfahren nach einem der Ansprüche 4 bis 8,
**dadurch gekennzeichnet, dass**
- mittels des ersten Zahlungssystems (ZS1) und des zweiten Zahlungssystems (ZS2) zahlungssystemübergreifend ein Bezahlvorgang vorbereitet wird.

10. Verfahren nach einem der vorhergehenden Ansprüche,
**dadurch gekennzeichnet, dass**
- das zweite Zahlungssystem (ZS2) einem zweiten Kommunikationsnetz (KN2) zugeordnet ist und mittels des ersten Zahlungssystems (ZS1) und des zweiten Zahlungssystems (ZS2) kommunikationsnetzübergreifend ein Bezahlvorgang vorbereitet wird.
